# EUROPEAN PATENT APPLICATION

(11) **EP 2 995 387 A2**
(43) Date of publication of application: **16.03.2016**
(21) Application number: 15184478.4
(22) Date of filing: 09.09.2015
(51) Int. Cl.: B08B 15/00

(54) **A TELESCOPIC EXTRACTION ARM**

(30) Priority: 12.09.2014 IT MO20140253
(71) Applicant: Filcar S.p.A., 42124 Reggio Emilia (IT)
(72) Inventor: MENOZZI, Paolo, 42124 REGGIO EMILIA (IT); GIANNINI, Luca, 42123 REGGIO EMILIA (IT); CORAL, Claudio, 10040 LEINI, TORINO (IT); CANGIANO, Andrea Silverio, 42011 BAGNOLO IN PIANO, REGGIO EMILIA (IT); VIRGA, Giuseppe, 42040 CAMPEGINE, REGGIO EMILIA (IT)
(74) Representative: Paparo, Aldo

(57) **Abstract**

A telescopic extraction arm, comprising a first telescopic tube (2) defined by two telescopic sleeves (6,7) slidingly coupled one to another, a second tube (10) connected to a lower end of the lower sleeve (7) of the first tube (2) by means of a first joint (11), which is configured at least to enable rotation of the second tube (10) relative to the first tube (2), a suction nozzle (12) connected, by means of a second joint (13), at one end (10b) of the second tube (10), which end (10b) is opposite to the first tube (2), the second joint (13) being configured at least to enable rotation of the suction nozzle (12) relative to the second tube (10), a counterweight (15), slidingly mounted on the upper sleeve (6) of the first tube (2) in order to compensate the weight of the sliding part (7, 10, 12) of the arm (1), during the raising step, and a plurality of wires (17) connecting the counterweight (15) with the lower sleeve (7) of the first arm (2), as to effect a raising of the counterweight when the lower sleeve (7) of the first tube (2) is lowered and vice versa.

## Description

The invention relates to a telescopic extraction arm which is particularly, (but not exclusively), destined for installation works in mechanical workshops, and predisposed for the extraction of fumes produced by motor vehicles' exhaust gases; the invention is also applicable to the field of welding fumes extraction and generally to the extraction of gaseous pollutants or harmful substances.

Additionally, the arm according to the invention is of the "touchless" type, i.e. it is adapted to be positioned in the working position without coming in contact with the muffler of the vehicle, thereby being able to support itself in a suitable position for performing a correct extraction of exhaust gas.

Such "touchless" systems differ from contact systems, in that they do not exhibit vises or other coupling members connected to the vehicle muffler, since the latter sometimes turns out to be difficult to access if not even in an internal position to the bumper; furthermore, the different car manufacturers' standards had made it difficult to use the same vise for all machines.

In detail, a commonly used exhaust gas extraction plant installed in a workshop, provides extraction arms extending from a same conduit - or duct - which duct runs along the workshop ceiling and is connected to a relative pneumatic vacuum source.

The known arms have a first upper telescopic tube comprising an upper sleeve supported by a carriage which slides along a rail formed on the duct, and a lower sleeve slidingly coupled to the upper sleeve in a telescopic manner.

Such arms further exhibit a second tube coupled to the lower end of the lower sleeve via a joint, so that a suction nozzle (applied to a free end of the second tube) can be placed in the desired position.

Said suction nozzle can be in turn movable relative to the second tube by means of a respective joint.

When in the resting position thereof, the arm takes on a raised configuration, wherein it disengages the space below, thus favoring the vehicle's maneuvers, operators' passage and so on, in particular it assumes a minimum height of 1.90 meters; this aspect determines the length of the upper sleeve which branches out inferiorly from the duct.

If necessary, the arm is lowered thereby favoring the telescopic sliding of the lower sleeve relative to the upper sleeve, then the second tube is manipulated so that the suction nozzle is disposed exactly in front of the muffler of the vehicle.

To ensure that the arm remains in the desired position, particularly from the point of view of vertical displacement, it is known to provide the first tube with a spring balance exhibiting a torsional spring; said torsional spring is mounted on the first tube and can be loaded or unloaded via suitable traction wires according to the telescopic sliding degree of the first tube, thereby compensating the weight of the arm and notably reducing the effort on the part of the operator to extend or retract the arm.

However the balance is not very accurate due to the fact that the spring is charged proportionally to the sliding of the two sleeve, while the weight of the movable part of the arm (i.e. lower duct, second tube and suction nozzle) is stationary.

"Rebounds" during motion can therefore occur, due to lack of balance between the weight of the movable part and proportional compensation of the spring, furthermore adequate sensitivity and finesse in height adjustment is not guaranteed.

Therefore, object of the present invention is to make available a telescopic extraction arm that overcomes the drawbacks of the known art mentioned above.

In particular, it is an object of the present invention to make available a telescopic suction arm exhibiting high sensitivity as well as movement accuracy.

It is a further object of the invention to provide a telescopic extraction arm with excellent maneuverability, particularly in terms of balancing.

The aim is fully attained by the telescopic extraction arm according to the present invention, which is characterized by the contents of the claims described hereinafter.

The technical characteristics of the invention according to aforesaid purposes, will more fully emerge from the content of the claims reported here below, and advantages thereof shall become more apparent in the detailed description of an embodiment of said invention as illustrated in a non-limiting example in the accompanying drawings wherein:
- Figures 1 and 3 illustrate a extraction arm according to the invention respectively in a rest configuration and in an operational configuration;
- Figures 2 and 4 illustrate the extraction arm according to the invention in the two configurations of Figures 1 and 3, with some parts thereof removed so as to show the internal components;
- Figure 5 is an enlarged view, partially in view and partially cutaway, of a detail of the extraction arm according to the invention;
- Figure 6 represents a alternative embodiment of a detail of the extraction arm according to the invention;
- Figure 7 is a detailed view of a further detail of the extraction arm according to the invention.
- Figure 8 illustrates, in a cross-section with some parts thereof removed, the extraction arm according to the invention provided with a further constructive detail.
- Figure 9 shows a perspective view of the constructive detail of Figure 8. With reference to the appended figures, by the numeral 1 it is generally indicated a telescopic extraction arm according to the present invention.

The arm 1 comprises a first tube 2, a first (upper) end 2a of which is connected to movement means, in particular a carriage 3 sliding on a preferably horizontal guide 4, which movement means allow a translational motion of the arm 1 along the guide 4. The guide 4 is formed externally to an extraction duct 5, which extraction duct 5 is connected to a source of pneumatic vacuum (not shown) and which, within an extraction plant, may support a plurality of extraction arms of the type described in the present invention. In mechanical workshops, the extraction duct 5 is for example fixed to the ceiling and takes on a stiff configuration.

Due to the connection to the extraction duct 5 via a fluid communication, also the first tube 2 comes to be a seat for pneumatic suction internally thereof.

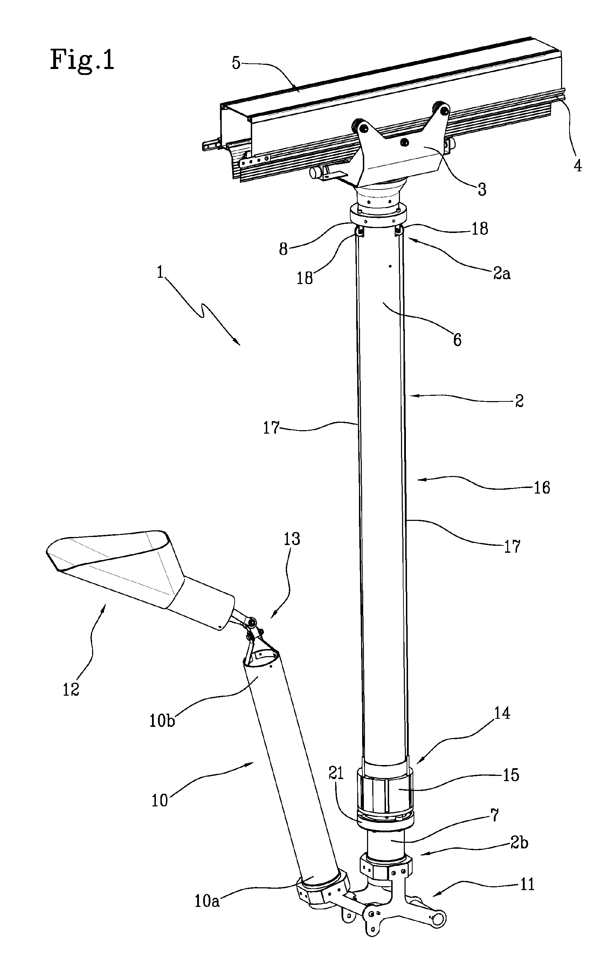

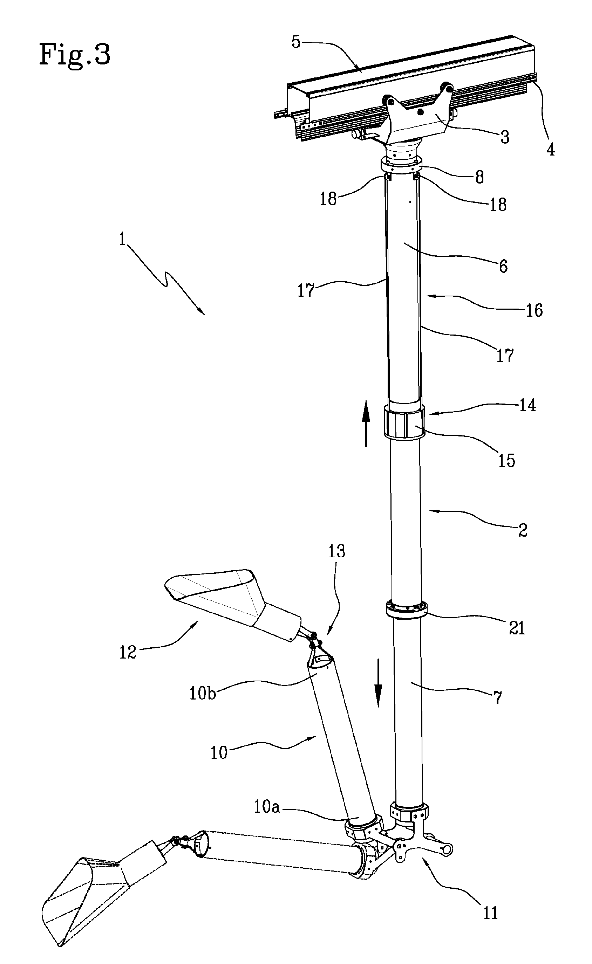

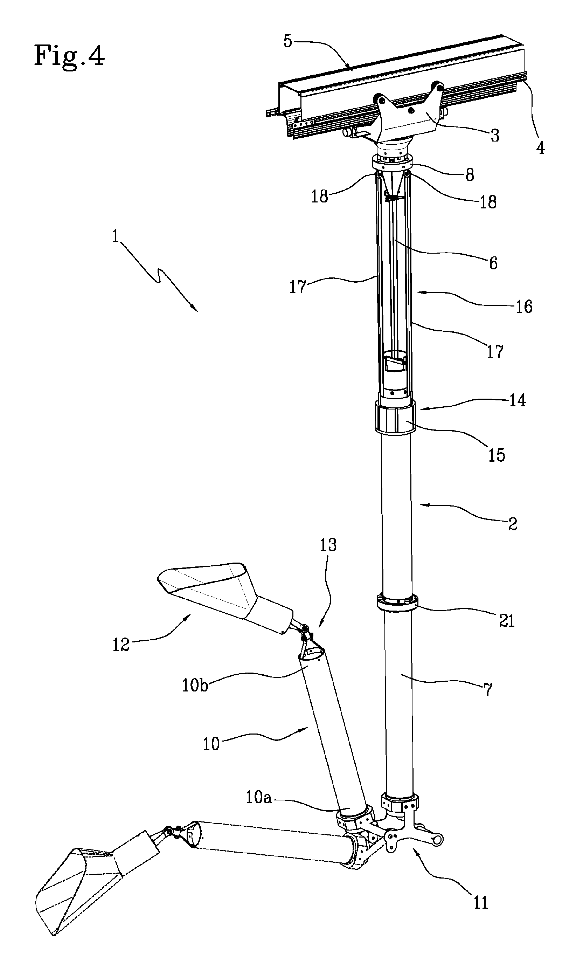

In more detail, as shown in Figures 1-4, the first tube 2 has a telescopic structure defined by an external upper sleeve 6 and an internal lower sleeve 7, whose upper part is inserted inside the upper sleeve 6, thereby coming out therefrom more or less, according to the configuration ("degree of extension") assumed by the arm.

The upper sleeve 6 represents the part of the first tube 2 which is fixed to the carriage 3 (thus not movable vertically), for example by means of flange 8 provided with fixing screws, while the lower sleeve 7 represents the movable part of the first tube 2, which enables lowering and raising of the arm 1 during use.

It should be appreciated that a configuration in which there are provided several lower sleeves is also possible, that is, a configuration wherein said movable part includes a plurality of sleeves telescopically coupled to one another, so that each of them is vertically slidable.

Between the two sleeves 6, 7, in particular between the respective surfaces in the overlapping area, there are preferably provided sealing elements (not shown), such as elastic sealing ring.

The first tube 2 is connected inferiorly, relative to the second end 2b defined by the lower sleeve 7, to a first end 10a of a second tube 10 by means of a first joint 11, adapted to define at least one rotation between the two tubes 2, 10 at least about an axis perpendicular to the axes of the two tubes 2, 10. The appended figures illustrate said joint 11, which exhibits a shape such as to be arranged externally to the areas affected by the facing ends of the two tubes 2, 10, so that a flexible angular element, (not shown), can be applied to such ends, which flexible angular element is adapted to provide a sealingly fluid communication between the two tubes 2, 10.

The second tube 10 has preferably a fixed and therefore non-telescopic configuration.

A suction nozzle 12 is connected to the second end 10b of the second tube 10 by means of a second joint 13 which is adapted to define at least one rotation between the two tubes 2, 10, at least about an axis perpendicular to the axes of the two tubes 2, 10 (and preferably parallel to the hinge axis defined by the first joint 11).

The arm 1 further comprises compensating means 14 acting at least on the lower sleeve 7 of the first tube 2. These compensating means particularly have the function to at least partially compensate the weight of the lifting part of the arm 1 (i.e. the lower sleeve 7, the second tube 10, the suction nozzle 12, the joints 11,13 and any other components arranged downstream of the lower sleeve 7).

Advantageously, the compensating means 14 comprises a counterweight 15 which is slidably mounted on the upper sleeve 6, and connection means 16 which are active between the counterweight 15 and the lower sleeve 7 so as to cause a lifting of the counterweight 14 in response to the lowering of the lower sleeve 7, and vice versa.

Preferably, the counterweight 15 has a mass substantially equal to the mass of the part of the extraction arm 1, which is slidingly suspended on the upper sleeve 6 of the first tube 2, that is to say, the overall mass of lower tube 7, second tube 10, suction nozzle 12, joints 11, 13 and any other organs which may be necessary.

Preferably, the counterweight 15 has an annular shape and is slidingly fitted externally to the upper sleeve 6.

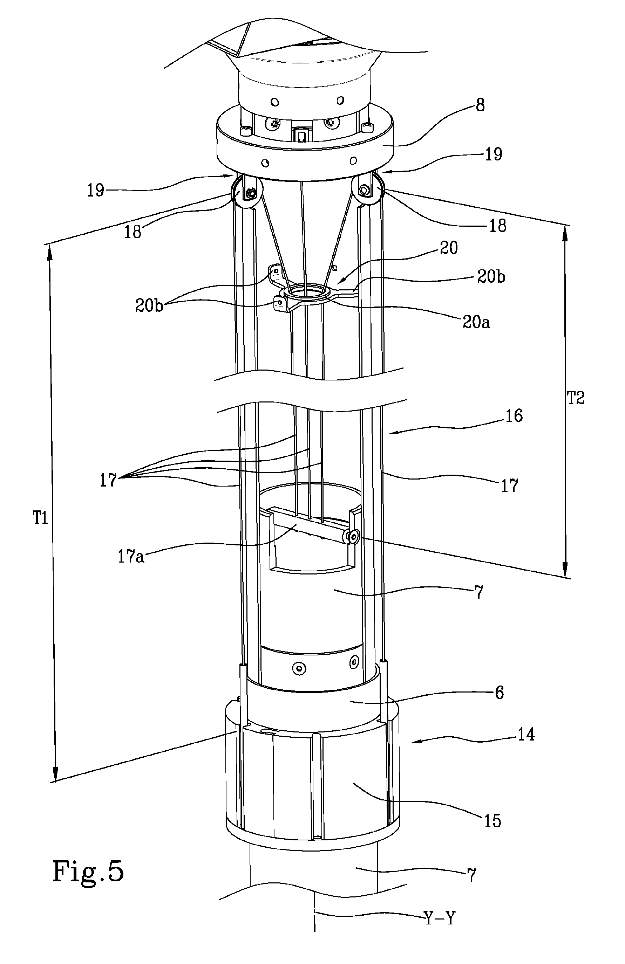

In a preferred embodiment, the counterweight 15 (Figures 1-4) has the shape of a substantially annular cylindrical or toroidal monolithic body. In an alternative and non-preferential embodiment (Figure 5), the counterweight 15 is formed by two or more angular sectors being rigidly interconnected one to another, thereby defining a single rigid body of annular shape, for example by means of grooved joints (e.g. of the dovetail type or the like) along a direction parallel to the axis of the first tube 2.

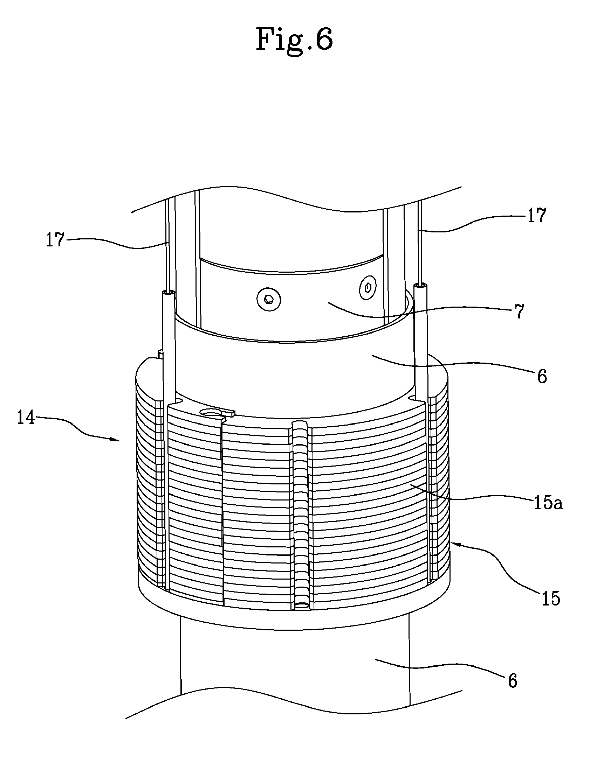

Furthermore, in a possible, likewise non-preferential embodiment (Figure 6), the counterweight 15 may be formed by a plurality of curved, superposed plates 15a which come to define a multilayer structure, with the advantage of being able to add or remove elements by varying the mass of the counterweight 15. This type of embodiment may provide circular plates or plates which are laterally provided with coupling elements as shown in Figure 6, such that, two or more plates being laterally connected one to another, come to define an entire circular development. The connection means 16 preferably comprises one or more wires or cables 17 (three of which are angularly equidistant by 120° in the embodiment of the appended figures), each wire being fastened on one side to the counterweight 15 and on the other side to an upper portion of the lower sleeve 7, for example by means of a transverse bar 17a (see Figure 5), or any other corresponding means being able to not noticeably obstruct the section destined for the passage of fumes and/or gases.

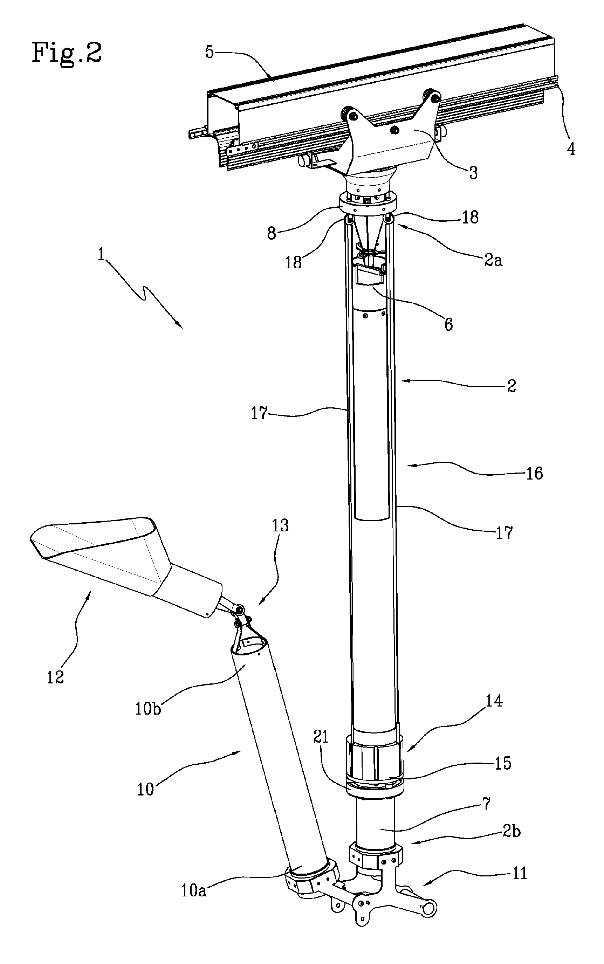

The connection means 16 further comprises at least one or more return members 18, one for each wire 17 (three of them being angularly equidistant by 120° in the embodiment of the appended figures), and preferably pulleys, said connection means 16 being arranged in an upper portion of the upper sleeve 6 as illustrated in Figures 2, 4 and 5.

Each return member 18 is associated with (and preferably arranged in) a respective through opening 19 which is afforded in the upper sleeve 6, thus allowing the wire 17 to take on a configuration, wherein it exhibits a first section "T1" external to the first tube 2, which first section "T1" is substantially comprised between the respective return member 18 and the counterweight 15, and a second section "T2" inside the first tube, being substantially comprised between the respective return member 18 and the lower sleeve 7.

Preferably, as visible in the cutaway view of Figure 5, inside the first tube 2 and steadily applied to the upper sleeve 6, there is housed a wire guide body 20 exhibiting an inner ring 20a with a smaller diameter than the inner diameter of the upper sleeve 6, and predisposed for collecting and confining the wires 17 in a given area of the upper sleeve 6. This inner ring 20a is secured to the inner wall of the upper sleeve 6 by means of radial expansions 21.

The wire guide body 20 is preferably placed in an upper portion of the upper sleeve 6, however, lower than the level which are arranged the return members 18.

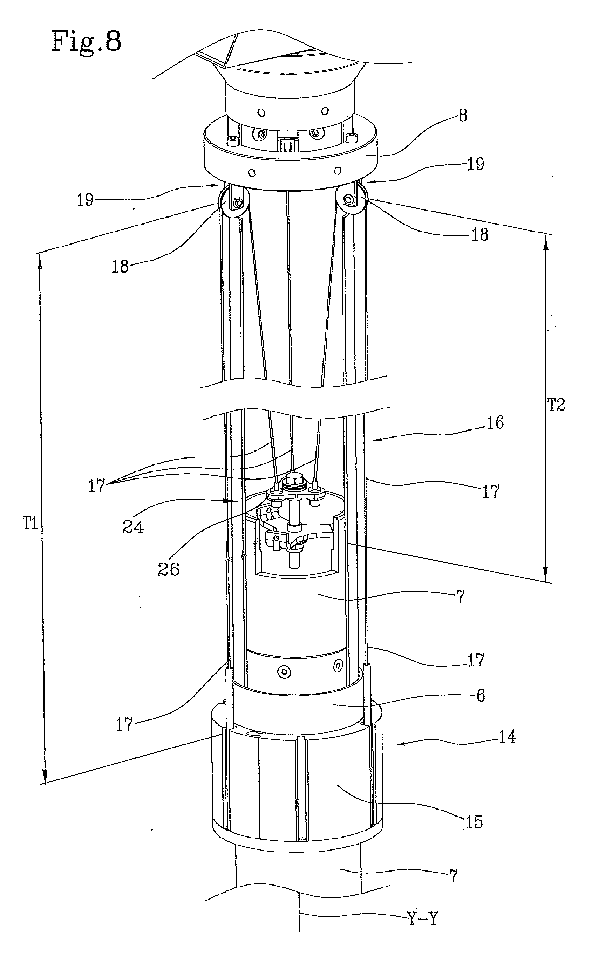

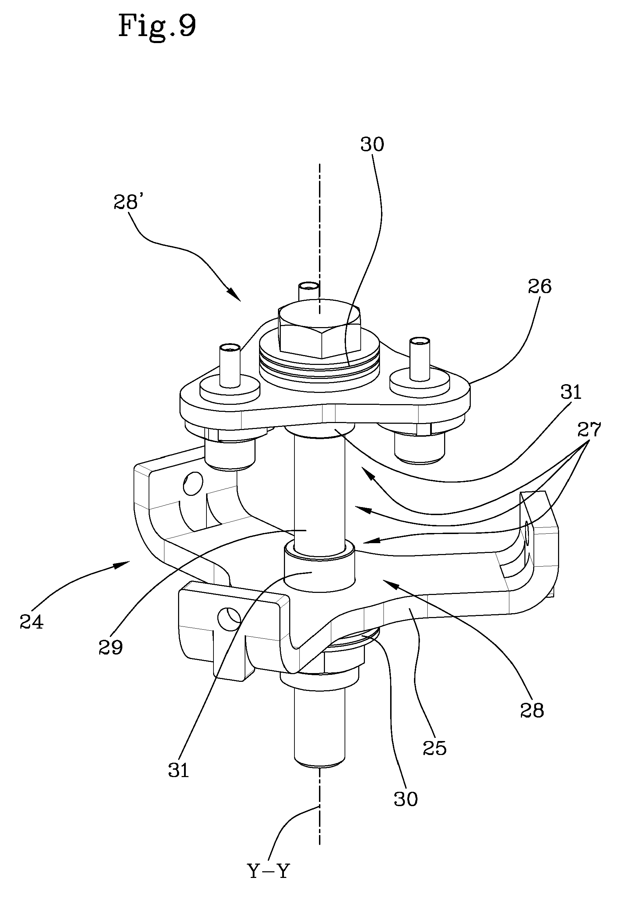

As illustrated in the accompanying Figures 8 and 9, the connection means 16 may further comprise anti-torsional means 24.

As illustrated in the accompanying Figures 8 and 9 the anti-torsional means 24 are preferably applied to a set of three wires 17, which may be applied to at least one wire 17 while not departing from the scope of the present invention.

The function of the anti-torsional means 24 is to prevent that a rotation of the lower sleeve 7 about the vertical axis thereof, is transmitted to the at least one wire 17.

Indeed, whereas the lower sleeve 7 as well as the second tube 10 may be rotated about a vertical axis, in the case where the wire 17 was directly connected to the lower sleeve 7, rotation of the latter would result in a rotation of the at least one wire 17.

The rotation of the wire 17, or the plurality of wires 17, may cause torsion stress such as to break the wire itself or shorten the length thereof thus limiting the travel stroke of the lower sleeve 7, or even, in the case of a plurality of wires, kinking of the same may occur with impairment of device functioning.

Here below reference will be made generically to at least one wire 17, wherein it should be appreciated the anti-torsional means 24 can be effective also for a plurality of wires 17, in particular a set of three wires, as shown in Figures 8 and 9.

Said anti-torsional means 24 are connected inferiorly to the lower sleeve 7 and superiorly to said at least one wire 17 (preferably to a plurality of wires 17).

The connection of the anti-torsional means 24 is such as to inhibit rotation of the wire 17 following rotation of the lower sleeve 7.

Said rotation taking place about a prevailing development axis Y-Y of the sleeve 7.

More specifically said anti-torsional means 24 comprises a first body 25, a second body 26 and dissipation means of the rotation 27 (illustrated in detail in Figure 9).

Said first body 25 is connected integrally to the lower sleeve 7. As illustrated in Figure 9, the first body 25 is preferably defined by a three cusps stellar body, each cusp of which being connected to the lower sleeve 7 through screws or other connecting means.

Said second body 26 is integrally connected to the at least one wire 17. As illustrated in Figure 8, said second body 26 is preferably defined by a flanged body to which a set of three wires 17 is connected.

The first and second bodies 25, 26 are in turn connected by the dissipation means of the rotation 27.

The dissipation means 27 comprises a first element 28 which is rotatingly connected to the first body 25, and a second element 28' rotatingly connected to the second body 26.

First and second elements 28, 28' are mutually rotatingly idle in order to prevent the transmission of rotational motion between the lower sleeve 7 and at least one wire 17 or more specifically between the first and second bodies 25,26.

As illustrated in Figure 9 first and second elements 28, 28' are preferably defined by an axial bearing 30, or axial washer, and a bushing 31 which are connected one to another by a peg 29.

In the cross-section, by starting from the top of Figure 9, the peg 29 passes through the second element 28, i.e. it passes through the axial bearing 30 and the bushing 31, and the second element 28', arranged symmetrically to the previous one, passing through the bushing 31 and the axial bearing 30.

Upon rotation of the lower sleeve 7, induced by rotation of the second tube 10, the first element 28 and/or the second element 28' prevent transmission of rotation to the second body 26.

More in detail, depending on the position assumed by the device or by the state of wear of the components, the rotation to the second body 26 is inhibited or excluded via the second element 28' or even via the first element 28.

On the first pipe 2, and in particular on the outer surface of the upper sleeve 6, there is provided a limit stop element 21 in a position which is substantially corresponding to the point of maximum descent of the counterweight 15. The limit stop element 21 may exhibit a radial dimension which is greater than the outer surface of the upper sleeve 6, whereon the counterweight 15 slides, said limit stop element 21 preferably having an annular expansion shape.

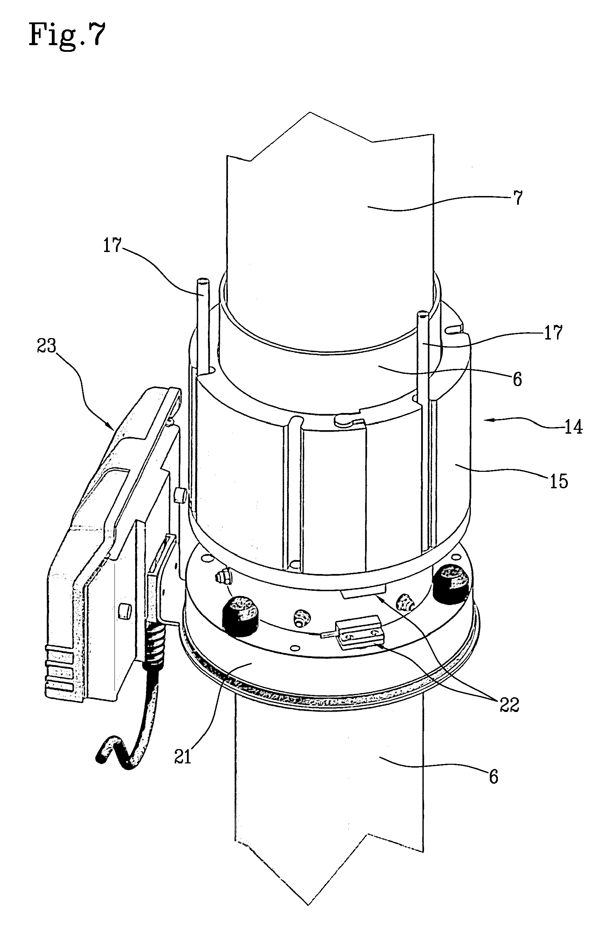

To the limit stop element 21 there are associated sensor means 22, for example micro-switches, magnetic type sensors, Hall effect optical sensors, or the like, being arranged in a position facing the counterweight 15 and acting to detect the instant at which the counterweight 15 is arranged close or relative to the limit stop element 21; said sensor means 22 being adapted to generate a corresponding signal which can be used for activating and/or deactivating the pneumatic suction associated with the extraction arm 1. This signal is preferably transmitted wirelessly by an emitter 23 (Figure 7) to a receiving control unit that controls the suction source. This implies that, when the counterweight 15 is disposed next to or in contact with the sensor means 22, the extraction arm 1 is in the maximum raised position, i.e. in the rest position thereof, thus being adapted to interrupt extraction operations in order to avoid waste of power. By way of example, in one embodiment, the extraction arm 1 is part of a plant wherein to the same extraction duct 5, there are connected several extraction arms of the type according to the invention. In this situation, the signal may be controlled via a control logic being able to disable the pneumatic suction (shared by all extraction arms), where the position of all arms detected by the respective sensor means is that of maximum lifting, i.e. a rest position. In case of lowering of one or more of above arms towards a working position, the sensor means would detect a movement of the counterweight 15 thus reactivating extraction within the extraction duct 5.

According to a particular aspect (not shown), the arm 1 further comprises a damper internally thereof, preferably placed inside the first tube 2, which damper is adapted to allow/inhibit fluid communication between the duct and aforementioned suction nozzle 12.

Preferably, opening and closing of the damper is subject to the sliding of aforementioned lower sleeve 7, in such a way as to open when the lower sleeve 7 is extracted telescopically, and to be closed when it is retracted completely into the upper sleeve 6.

The invention attains the set aims, thereby overcoming the drawbacks of the prior art.

The use of a counterweight compensation system according to the invention, allows to obtain a constant compensation of entities, which is independent of the configuration assumed by the extraction arm. In addition, the counterweight positioning control and therefore of the arm, can be advantageously used to perform automatic switching off and switching on of the extraction duct, thus reducing energy consumption at times when operation thereof is not requested by the users.

## Claims

1. A telescopic extraction arm, comprising: a first telescopic tube (2), in turn comprising a upper sleeve (6) and at least a lower sleeve (7) telescopically connected to the upper sleeve (6); and a compensating means (14) acting at least on the lower sleeve (7) of the first tube (2); **characterized in that** said compensating means (14) comprises at least a counterweight (15) slidingly mounted on the upper sleeve (6) of the first tube (2) and a connection means (16) which is active between the counterweight (15) and the lower sleeve (7) of the first arm (2) so as to effect a raising of the counterweight (15) when the lower sleeve (7) of the first tube (2) is lowered and vice versa.

2. An arm according to claim 1, wherein said first tube (2) is provided on top with a movement means (3) for a sliding connection to an extraction duct (5), the arm (1) further comprising at least a second tube (10) connected to a lower end of the lower sleeve (7) of the first tube (2) by means of a first joint (11) configured to enable a rotation of the second tube (10) relative to the first tube (2).

3. An arm according to claim 1 or claim 2, wherein the counterweight (15) has a weight that is substantially equal to the weight of the part of the extractor arm (1) slidingly suspended on the upper sleeve (6) of the first tube (2).

4. An arm according to any one of the preceding claims, wherein the counterweight (15) has an annular shape and is slidingly fitted over the upper sleeve (6).

5. An arm according to any one of the preceding claims, wherein the lower sleeve (7) of the first tube (2) is slidingly inserted in the upper sleeve (6) of the first tube (2).

6. An arm according to any one of the preceding claims, wherein the connection means (16) comprises at least one wire (17) fixed on one side to the counterweight (15) and on the other side to an upper portion of the lower sleeve (7).

7. An arm according to the preceding claim, wherein the connection means (16) further comprises at least one return member (18), preferably a pulley, associated with a respective wire (17) and disposed in an upper portion of the upper sleeve (6), said return member (18) being associated with a respective through opening (19) fashioned in the upper sleeve (6) so as to enable said wire (17) to take on a configuration wherein it has a first part (T1), which is substantially comprised between the return member (18) and the counterweight (15), outside the first tube (2), and a second part (T2), which is substantially comprised between the return member (18) and the lower sleeve (7), inside the first tube (2).

8. An arm according to the preceding claim, wherein the connection means comprises a plurality of wires (17) and a plurality of return members (18), each of which associated with a respective wire (17) and a respective through opening (19), and wherein the extraction arm (1) further comprises a wire guide body (20), applied inside the upper sleeve (6) and preferably in an upper portion of the upper sleeve (6) near the return members (18), the wire guide body (20) comprising an internal ring (20a) having a diameter that is smaller than the inner diameter of the upper sleeve (6) and which is intended to gather and confine the wires (17) within a pre-established area of the upper sleeve (6), preferably near the axis thereof.

9. An arm according to any one of the preceding claims, further comprising at least one limit stop element (21) disposed on the upper sleeve (6) of the first tube (2) in a position substantially corresponding to the point of maximum lowering of the counterweight (15), and further comprising a sensor means (22) which is intended to detect the position of the counterweight in proximity to or on the limit stop element (21) and to generate a corresponding signal that can be used to activate and/or deactivate the pneumatic suction associated with the extraction arm (1).

10. An arm according to the preceding claim, further comprising at least one wireless signal emitter (23) associated with said sensor means (22) so as to send a wireless signal identifying the position taken on by the counterweight (15) to a control unit controlling the pneumatic vacuum inside the extraction duct (5).

11. An arm according to any one of the preceding claims, comprising sliding seal means or gaskets interposed between the two sleeves (6, 7) of the first tube (2) and serving to perform a further function of slowing down the reciprocal sliding of the two sleeves (6, 7).

12. An arm according to claim 6, **characterized in that** said connecting means (16) further comprises anti-torsional means (24), inferiorly connected to the lower sleeve (7) and superiorly connected to said at least one wire (17), said anti-torsional means being suitable for inhibiting a rotation of the wire (17) in response to a rotation of the lower sleeve (7).

13. An arm according to claim 12 **characterized in that** said anti-torsional means (24) comprises:
a first body (25) solidly connected to the lower sleeve (7); a second body (26) solidly connected to the at least one wire (17); dissipation means of rotation (27) defined by a first element (28), being rotationally connected to the first body (25), and a second element (28), rotationally connected to the second body (26); said first and second element (28,28') being rotatingly neutral, thereby avoiding transmission of rotational motion between the first body (25) and second body (26).

14. An arm according to claim 13 **characterized in that** said first and second element (28,28') are preferably axial bearings, or axial washers, which are rotatingly coupled one to another by means of a peg (29).

15. An extraction system comprising:
a pneumatic vacuum source;
at least one extraction duct (5) connected to said pneumatic vacuum source;
a control unit configured to control the supply of said pneumatic vacuum from said source to said duct (5);
a plurality of extraction arms (1) according to any of the preceding claims, interconnected at different points of said same extraction duct (5);
wherein each extraction arm (1) has sensor means (22) configured to detect at least the reaching of a non-operational configuration of said extraction arm (1), preferably a maximum raised position, and to generate a corresponding wireless signal identifying the reaching thereof; and
wherein said control unit controlling the pneumatic vacuum source is configured to receive said wireless signal and deactivate the pneumatic vacuum supply to the extraction duct (5) when the sensor means (22) of all the extraction arms (5) associated with said duct (5) deliver a signal identifying that the non-operational configuration of the respective extraction arms (1) has been reached.
